# EUROPÄISCHE PATENTANMELDUNG

(11) **EP 2 073 348 A1**
(43) Veröffentlichungstag der Anmeldung: **24.06.2009**
(21) Anmeldenummer: 07076112.7
(22) Anmeldetag: 20.12.2007
(51) Int. Cl.: H02K 1/20, H02K 9/18

(54) **Elektromotor mit geführter Innenkühlung**

(71) Anmelder: SycoTec GmbH & Co. KG, 88299 Leutkirch im Allgäu (DE)
(72) Erfinder: Bischof, Thomas, 87758 Illerbeuren (DE); Maier, Sandra, 88410 Bad Wurzach (DE); Werner, Dieter, 88299 Leutkirch (DE)
(74) Vertreter: Golkowsky, Stefan

(57) **Zusammenfassung**

Die Erfindung betrifft einen Elektromotor (1) bzw. Generator, enthaltend einen Rotor (2), einen Stator (3), sowie einen zwischen Rotor (2) und Stator (3) verlaufenden Spalt (4), wobei zwischen Rotor (2) und Stator (3) mindestens eine gegenüber dem Spalt (4) geschlossene Leitung (5) zur Kühlung des Elektromotors angeordnet ist, und in mindestens einer Querschnittsfläche (B; Fig. 1b) des Stators (3) senkrecht zum Rotor (2) die mindestens eine Leitung (5) mit dem Stator (3) zur Befestigung und Wärmeleitung verbunden ist.

Mit der Erfindung wird ein Elektromotor bzw. Generator bereitgestellt, der bezogen auf seine Leistung sehr kleinbauend und wenig störanfällig ist.

## Beschreibung

Die Erfindung betrifft einen Elektromotor nach Anspruch 1.

Elektromotoren sind in vielfältigen Bauformen und Anwendungen bekannt.

Nachteilig ist, insbesondere im Dauerbetrieb bzw. bei sehr hochdrehenden Elektromotoren, dass diese aufgrund mechanischer Reibung bzw. durch die hohe elektrische Belastung überhitzen.

Dieser Überhitzung wird bisher dadurch begegnet, dass die Belastung des Motors verringert wird, bzw. dass durch die Anordnung von Kühlrippen oder Wasserkühlung im äußeren Statorbereich eine bessere Wärmeableitung erfolgt. Hierbei ist allerdings die Kühlleistung für manche Anwendungen ungenügend.

Es liegt daher der vorliegenden Erfindung die Aufgabe zugrunde, einen Elektromotor zu schaffen, der kleinbauend ist und selbst bei höchster Belastung (sei es durch Dauerbetrieb oder hohe Drehzahlen) ausfallsicher und mit gleichmäßiger Temperierung arbeitet.

Dies wird durch einen Elektromotor nach Anspruch 1 gewährleistet.

Der erfindungsgemäße Elektromotor enthält einen Rotor, einen Stator sowie einen zwischen Rotor und Stator verlaufenden Spalt. Hier ist zwischen Rotor und Stator außerdem mindestens eine gegenüber dem Spalt geschlossene Leitung zur Kühlung des Elektromotors angeordnet. In mindestens einer Querschnittsfläche des Stators senkrecht zum Rotor ist hierbei die mindestens eine Leitung mit dem Stator zur Befestigung und Wärmeleitung verbunden.

Unter "Spalt" wird vorliegend der tatsächliche geometrische Spalt gemeint. Dieser ist also in der Regel kleiner als der Spalt zwischen den elektrisch bzw. magnetisch aktiven Bereichen des Rotors (Rotormagnet) einerseits sowie des Stators (z.B. Statorwicklung, Statorrückschluss) andererseits. Dies liegt daran, dass zwischen den elektrisch bzw. magnetisch aktiven Teilen die erfindungsgemäße Kühlung zusätzlich angebracht wird, die den üblichen Luftspalt in der Größe verringert.

Außerdem ist vorgesehen, dass in mindestens einer Querschnittsfläche des Stators senkrecht zum Rotor die mindestens eine Leitung mit dem Stator verbunden ist. Dies dient zum einen der Befestigung der Leitung in diesem Bereich. Es handelt sich hierbei um eine gegenüber dem Spalt "geschlossene" Leitung, also nicht den Luftspalt selbst. Durch die Befestigung ist außerdem eine Wärmeableitung vom Motor (beispielsweise dem Stator) zu der Leitung hin möglich, um auf diese Weise dem Motor einen möglichst hohen Wärmestrom entziehen zu können.

Bei der erfindungsgemäßen "geführten Luftspaltkühlung" erfolgt also zwischen dem Innendurchmesser des Wickelsystems (Wickeldraht und Statorbleche) und dem Rotor die Kühlung. Hierbei wird das Kühlmedium definiert durch Kühlleitungen geführt. Besonderer Vorteil ist, dass die Kühlflüssigkeit hierbei von dem Spalt bzw. den elektrischen Teilen bzw. der Umgebung nicht aufgenommen wird. Auf diese Weise können beliebige Medien (z.B. Gase oder Flüssigkeiten) zur Kühlung verwendet werden, allein ausschlaggebend sind hier Kosten bzw. thermisch günstige Parameter (spezifische Wärmekapazitäten, Wärmeübergangszahlen). So kann es sogar möglich sein, korrosive oder explosive Medien zur Kühlung einzusetzen, die sich normalerweise nicht einsetzen ließen. Das Leitungssystem kann außerdem auch zur Durchleitung von Medien genutzt werden, z.B. der Durchleitung von Kühl- und Schmieremulsion zur Kühlung oder Schmierung von Werkzeugen oder Werkstücken in Werkzeugmaschinen (z.B. Bearbeitungszentren). Hierdurch wird mit einem einzigen Kühlkreislauf zunächst einmal der antreibende Motor, anschließend jedoch auch ein sonst überhitzendes Werkzeug gekühlt.

Grundsätzlich kann ein Motor (bzw. ein als Generator betriebener erfindungsgemäßer Motor) mit geführter Luftspaltkühlung vor allem in bekannten Permanentmagnet-Synchronmotoren eingesetzt werden. Als besondere Einsatzgebiete empfehlen sich jedoch Präzisionswerkzeugmaschinen (aufgrund der reduzierten Längenausdehnung des Rotors durch die "kalte Welle" (bzw. Welle mit konstant gehaltener Betriebstemperatur) sind hier kleinere Bauformen und somit auch kleinere Trägheiten der Rotoranordnung möglich). Ein besonderes Anwendungsgebiet sind Hochleitungsgeneratoren bzw. Motoren. Stets zum Einsatz kommen kann ein erfindungsgemäßer Motor bei wärmesensiblen Prozessen, beispielsweise in wärmesensiblen Medien (bei Blutpumpen etc.). Hierbei findet der Motor auch gewichts- und größenkritischen Anwendungen seine Verwendung und auch bei Elektromotoren, die für Hochtemperaturanwendungen (beispielsweise in Gießereien etc.) verwendet werden.

Durch die erfindungsgemäße Lösung wird eine kostengünstige Kühlung des gesamten Motors bzw. Generators erreicht. Die Kühlung des Rotors (über den Spalt) bewirkt eine geringere Wärmeausdehnung der Rotorwelle (kalte Welle). Außerdem bedeutet dies eine Erhöhung der Standzeit von Klebeverbindungen am Rotor (beispielsweise der Fügung eines Metallkerns einer Rotorwelle mit darum liegenden Rotormagneten. Außerdem kommt es durch die Anordnung der Kühlleitung im herkömmlichen Luftspalt zu einer Unterdrückung des beidseitigen Wärmeflusses zwischen Stator und Rotor. Dies bewirkt außerdem eine Leistungserhöhung des Gesamtmotors bzw. Gesamtgenerators durch die (zur Außenkühlung) ergänzte Innenkühlung. Hierdurch wird, wie bereits erwähnt, eine Gewichtsersparnis des Gesamtmotors sowie eine Reduzierung der Baugröße erreicht (und dies alles, obwohl die Leitungen selbst auch Bauraum und Gewicht beanspruchen). Außerdem ist das erfindungsgemäße Kühlsystem relativ leckagesicher, da es in einem geschlossenen Kreislauf führbar ist, der selbst unbewegliche Teile enthält.

Vorteilhafte Weiterbildungen werden in den abhängigen Ansprüchen erläutert.

Eine vorteilhafte Weiterbildung sieht vor, dass die mindestens eine Leitung mit dem Stator vergossen ist. Dieses "Vergießen" kann durch ein Kunststoffmaterial, insbesondere ein Kunstharz erfolgen. Hierdurch ist zum einen eine leckagesichere Befestigung der Leitung gegeben, außerdem ergibt sich hierdurch ein sehr guter Wärmeübergang einerseits von dem Spalt zur Leitung hin, andererseits vom Stator zur Leitung hin. Es kann ein übliches Kunstharz, das auch für das Vergiessen der Statorwicklung benutzt wird, zur Anwendung kommen mit einer Wärmeleitfähigkeit von 0,5 bis 3 W/(mK). Die gesamte Statorwicklung und die Leitungen zur Kühlung werden vorzugsweise gemeinsam vergossen.

Eine weitere vorteilhafte Weiterbildung sieht vor, dass die Leitungen zur Kühlung in axialer Richtung des Rotors über eine geringere oder größere Länge verlaufen als die Länge von Stator und/oder Rotormagnet. Hierdurch wird die Kühlleistung nochmals erhöht, die Länge des zu kühlenden Bereichs ist hierbei nicht zwingend an die Abmessung von Rotor bzw. Stator gebunden.

Eine weitere vorteilhafte Weiterbildung sieht vor, dass für sämtliche Leitungen eine gemeinsame und geregelte Zu- und Ableitung gegeben ist. Hierbei kann die durch die Leitungen geführte Flüssigkeit bzw. das durch die Leitungen geführte Gas auch im Kreislauf geführt werden. Zusätzlich kann es auch mit einem Wärmetauscher verbunden werden. Auch möglich ist eine mehrstufige Kühlung, dass beispielsweise die durch den Motor verlaufende mindestens eine Leitung mit einem weiteren zu kühlenden Bauteil wärmeleitend verbunden ist. Dieses weitere Bauteil kann beispielsweise der Bearbeitungskopf eines Bearbeitungszentrums sein.

Die Leitungen selbst können auf verschiedene Weise um den Rotor angeordnet sein.

Zunächst einmal ist eine "radial umgebende" Variante möglich. Hier ist es vorteilhaft, dass die Leitung den Rotor mindestens einmal umläuft. Dies kann "spiralförmig" geschehen. Zum einen ist möglich, dass die Leitung an dem einen axialen Ende des Stators beginnt und an dem entgegengesetzten axialen Ende des Stators endet; es ist auch möglich, dass sie am selben axialen Ende beginnt und endet.

Bei einer spiralförmigen Ausführungsform ist es vorteilhaft, dass die Spiralwindungen so eng sind, dass sie einander tangieren bzw. der Abstand zwischen den Leitungen weniger beträgt als einen Außendurchmesser der Leitung (an ihrem engsten Querschnitt). Hierdurch wird eine größtmögliche Kühlleistung möglich, da das Volumen des Kühlfluids hierdurch sehr groß gehalten werden kann.

Vorzugsweise ist hierbei auch eine Reglung vorzusehen, welche eine Überhitzung der Kühlflüssigkeit detektiert und durch eine schnellere Durchleitung durch die Kühlleitungen kompensiert bzw. kühleres Fluid durch die Leitungen führt.

Eine weitere vorteilhafte Weiterbildung sieht vor, dass die Leitung im Wesentlichen parallel zur axialen Richtung des Rotors verläuft. Hierbei ist es auch möglich, dass mehrere Leitungen, die bezüglich des Rotors im Wesentlichen axial angeordnet sind, radial über den Umfang des Stators verteilt sind. Hierbei können die Abstände auch sehr klein gewählt sein. Sie können sich sogar berühren bzw. einen kleinen Abstand aufweisen, beispielsweise weniger als den Außendurchmesser der Leitung in ihrem kleinsten Durchmesserbereich. Durch "radial versetzte" Anordnungen kann hierbei noch mehr Kühlfläche eingebracht werden, hier ist allerdings der entsprechende Bauraum zu beachten, der zwischen Stator und Rotor begrenzt ist.

Die Leitungen sind vorzugsweise vollständig umgossen, hierdurch ergibt sich eine besondere Leckagesicherheit und auch eine gute Wärmeableitung. Es ist allerdings auch möglich, dass diese Leitungen im Wesentlichen "frei" im Spalt sind, hier ist dann allerdings auf eine ausreichende Befestigung zum Stator hin und auf eine Leckagesicherung zu achten.

Der verbleibende Spalt zwischen Rotor und Kühlung ist vorzugsweise kreiszylinderförmig ausgeführt, hierdurch ergibt sich ein relativ kleinbauender Spalt, der auch eine gute Wärmeübertragung vom Rotor zu den Kühlleitungen hin ermöglicht.

Eine weitere vorteilhafte Weiterbildung sieht vor, dass das Verhältnis der Querschnittsfläche des Stators zur Querschnittsfläche des Rotormagneten (V_{QS} = A_{Stator} : A_{Rotormagnet}) zwischen 2 und 100, vorzugsweise zwischen 10 und 50 beträgt. Hier sind jeweils "Nettoquerschnittsflächen" der elektrisch wirksamen Bestandteile des Stators bzw. Rotormagneten anzugeben. Isolierende Bestandteile (wie beispielsweise die Leitung und deren Eingießung) bzw. nicht elektrisch/magnetisch wirksame Bestandteile werden hier nicht eingerechnet. So wird bei dem Stator ein Metallgrundkörper (einschließlich beispielsweise Kupferwicklung) in den Querschnitt mit einberechnet, ein umgebender isolierender Kunststoff allerdings nicht. Entsprechend werden bei dem Rotormagneten auch nur die tatsächlich magnetisch wirksamen Flächen eingerechnet, auch wenn der Rotor aus verschiedenen Teilen besteht (dann sind die Einzelflächen entsprechend zu addieren, so dass sich eine Gesamtfläche des Rotormagneten ermitteln lässt). Der genannte Querschnitt liegt vorzugsweise senkrecht zur Achse des Rotors. Eine weitere vorteilhafte Weiterbildung sieht hierbei vor, dass der kleinste Innendurchmesser des Stators 1,1- bis 1,49-mal bzw. 8,01- bis 15-mal so groß ist wie der größte Außendurchmesser des Rotors. Besonders vorzugsweise ist der kleinste Innendurchmesser des Stators 1,5- bis 8-mal so groß wie der größte Außendurchmesser des Rotormagneten. Auch hier wird (wie in den vorangegangenen Sätzen beschrieben) lediglich auf die elektrisch/magnetisch wirksamen Bestandteile des Stators bzw. des Rotors/Rotormagneten abgehoben.

Weitere vorteilhafte Weiterbildungen werden in den übrigen abhängigen Ansprüchen angegeben.

Die Erfindung wird nun anhand mehrerer Figuren erläutert. Es zeigen:
- Fign. 1a bis 1c: eine Ansicht bzw. Schnitte einer ersten Ausführungsform eines erfindungsgemäßen Motors bzw. Generators,
- Fign. 2a und 2b: Schnitte und Ansichten einer zweiten Ausführungsform eines erfindungsgemäßen Motors bzw. Generators.

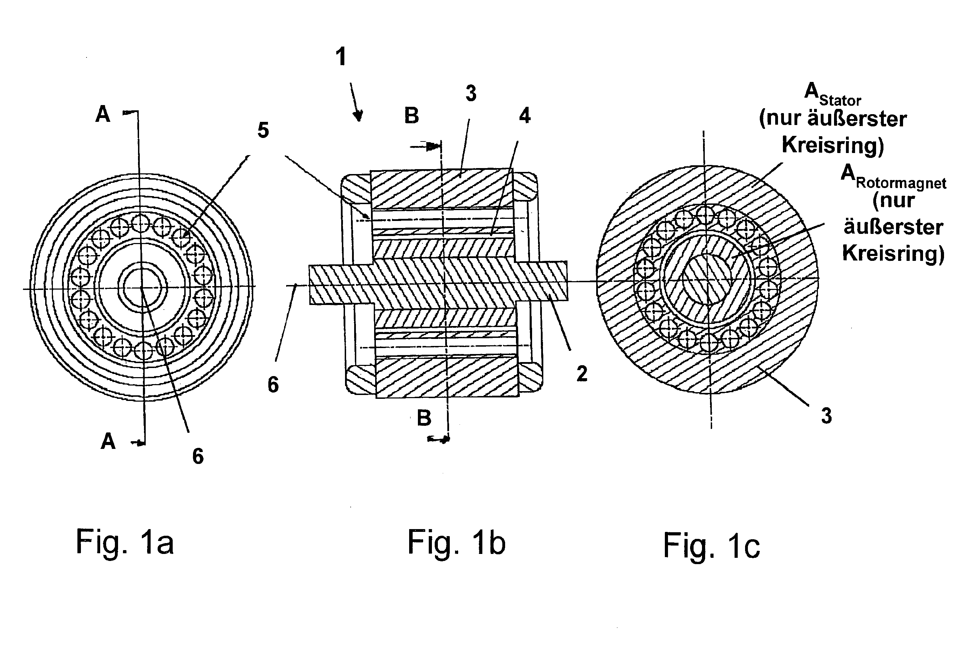

Fig. 1a zeigt eine Draufsicht eines erfindungsgemäßen Elektromotors bzw. Generators 1. Fig. 1b zeigt einen Schnitt gemäß A-A, Fig. 1c zeigt einen Schnitt gemäß B-B. Der erfindungsgemäße Motor zeigt einen Rotor 2, der hier auf nicht näher dargestellte Weise beidseitig gelagert ist. Der Rotor besteht aus einem Metall und ist von einem Rotormagneten 8 umgeben. Rotor und Rotormagnet sind vorliegend im Wesentlichen kreiszylindrisch bzw. kreisringzylindrisch geformt. Der zum Rotor 2 gehörende Rotormagnet 8 ist von einem kreiszylindrischen Spalt 4 umgeben. Dieser Spalt ist im Wesentlichen kreisringzylindrisch geformt und weist eine Spaltbreite von vorliegend 0,2 mm auf. Die günstigste Spaltbreite für Motoren dieser Art sieht vor, dass der Spalt so klein wie möglich ist. Bei nicht kreisringzylindrischen Anordnungen wird der kleinste umschreibende Kreis um den Rotor herum als größter Außendurchmesser des Rotormagneten angesehen.

An den Spalt 4 nach außen hin anschließend ist eine Mehrzahl von Leitungen 5 vorgesehen. Dies sind vorliegend 18 Leitungen, die im gleichen Abstand zueinander und im selben Abstand zu der Zentralachse der Welle hin angeordnet sind. Die Leitungen 5 verlaufen parallel zur axialen Richtung 6 des Rotors (d.h. in Richtung der Zentralachse der Welle). Der seitliche Abstand zwischen den Leitungen ist hierbei relativ klein gewählt, er beträgt weniger als einen Außendurchmesser der Leitung. Sämtliche Leitungen sind zu beiden Enden des Elektromotors bzw. Generators hin offen. Hierdurch würde sich zum einen ein Kühleffekt allein schon durch das umgebende Medium, im Normalfall Umgebungsluft, ergeben.

Eine bessere Kühlwirkung ist jedoch dadurch erzielbar, dass ein Fluid (ein Gas oder eine Flüssigkeit) gezielt durch diese Leitungen geführt wird.

Hierbei ist möglich, dass die Zuführungen zu den einzelnen Leitungen jeweils einzeln erfolgt, es ist jedoch vorteilhaft, mehrere Zuleitungen bzw. Ableitungen zusammenzufassen, um somit den Temperaturausgleich zwischen einzelnen Leitungen zu verbessern und den konstruktiven Aufwand zu vermindern.

Nach radial außen hin schließt sich unmittelbar der Stator mit seinen elektrisch wirksamen Bestandteilen, vorliegend einer Statorwicklung, die um einen Statorkern mit Rückschlussring angeordnet ist, an.

Die Leitungen 5 sind hierbei mit einem Kunstharzmaterial vergossen, so dass sie fest mit dem Stator verbunden sind und der Rotor ohne weiteres noch entnehmbar bleibt. Die Vergussmasse der Leitungen mit dem Stator ist im Beispielsfall identisch mit der Vergussmasse für die Statorwicklung, dies ist aber nicht zwingend.

Gezeigt ist hier also ein Elektromotor bzw. Generator, enthaltend einen Rotor 2, einen Stator 3 sowie einen zwischen Rotor 2 und Stator 3 verlaufenden Spalt 4. Zwischen Rotor 2 und Stator 3 ist mindestens eine gegenüber dem Spalt geschlossene Leitung 5 zur Kühlung des Elektromotors angeordnet und diese ist in mindestens einer Querschnittsfläche des Stators (siehe Querschnitt B-B in Fig. 1c) senkrecht zum Rotor 2 mit dem Stator 3 zur Befestigung und Wärmeleitung verbunden.

Die Befestigung der Leitung erfolgt hierbei im "zentralen" Bereich des Motors, d.h., es sind axial innerhalb bzw. außerhalb keine zusätzlichen Befestigungen für die Leitung vonnöten. Durch das Vergießen der Leitungen mit dem Stator ist außerdem ein sehr guter Wärmeübergang von den Leitungen zum Stator hin gegeben, außerdem ist über den nahe gelegenen Spalt 4 auch zum Rotor hin eine gute Wärmeübertragung möglich.

Der Elektromotor 1 ist vorliegend als Permanentmagnet-Synchronmotor ausgeführt.

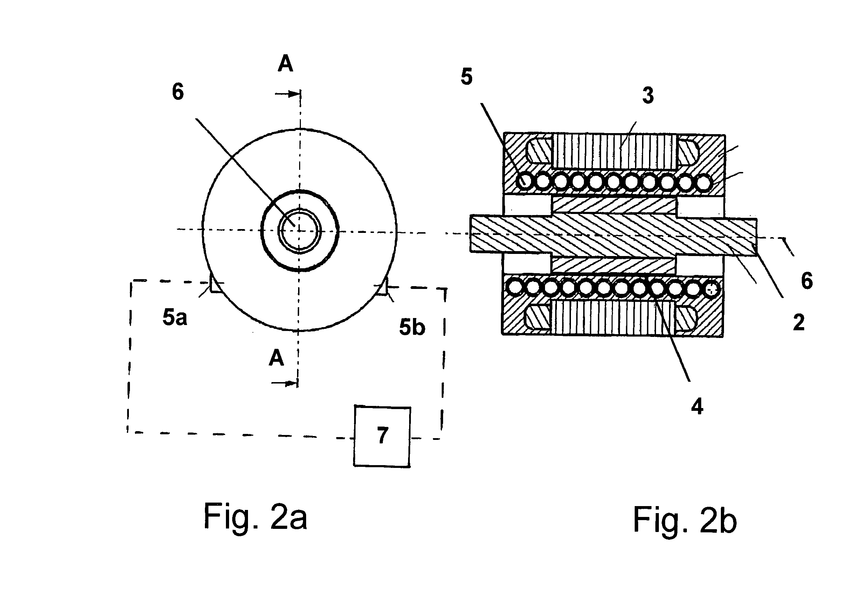

Fign. 2a bis 3b zeigen Ansichten bzw. einen Schnitt (Fig. 2b) durch eine weitere Ausführungsform eines erfindungsgemäßen Elektromotors bzw. Generators.

Hierbei sind sämtliche der für die erste Ausführungsform genannten Details identisch, abgesehen von dem Verlauf der Kühlleitung 5. Von daher wird auf die übrigen, bereits oben bekannten Merkmale, zur Vermeidung von Wiederholungen verzichtet.

Fig. 2a zeigt wiederum eine Vorderansicht eines Elektromotors bzw. Generators 1, hier ist zusätzlich linksseitig eine Zuleitung 5a und rechtsseitig eine Ableitung 5b zu sehen. Zuleitung 5a bzw. Ableitung 5b sind hierbei mit einem Wärmetauscher 7 verbunden, der ein zwischen Zu- und Ableitung zirkulierendes Fluid fortlaufend herunterkühlt, um im Rotor eine konstante Betriebstemperatur zu gewährleisten. Hierbei sieht der Wärmetauscher 7 auch eine Sensorik zur Ermittlung der Eingangstemperatur des zirkulierenden Fluids in den Wärmetauscher vor. Abhängig hiervon (und der vom Bediener gewünschten Temperatur innerhalb des Motors) erfolgt eine starke oder weniger starke Kühlung des Fluids im Wärmetauscher.

Die Leitung 5 umläuft spiralförmig mehrfach den Rotor 2 bzw. Rotormagneten 8. Es ist hier also nur eine einzige Leitung vorgesehen, die zwischen Zuleitung 5a und Ableitung 5b spiralförmig verläuft. Hierbei sind die Spiralwindungen so eng aneinander gefasst, dass sie sich fast berühren bzw. sogar berühren. Die Leitungen verlaufen hierbei über eine größere Länge als die Länge des Rotormagneten und auch über eine größere Länge als die elektrisch wirksamen Bestandteile des Stators (jeweils in axialer Richtung 6 des Rotors 2 gesehen). D.h., dass die Länge l_{Leitung} größer ist als die Länge l_{Stator} bzw. l_{ROtor} in Fig. 2b.

Für die gezeigten Ausführungsformen von Fig. 1a bis Fig. 2b gilt, dass der kleinste Innendurchmesser des Stators 3 1,05 mal bis 6 mal so groß wie der größte Außendurchmesser des Rotors 2. Beide Werte wurden, wie einleitend beschrieben, nur anhand der Ausmaße der tatsächlichen Ausdehnung der elektrisch bzw. magnetisch wirksamen Bestandteile von Rotor bzw. Stator ermittelt.

## Patentansprüche

1. Elektromotor bzw. Generator (1), enthaltend einen Rotor (2),
einen Stator (3), sowie
einen zwischen Rotor (2) und Stator (3) verlaufenden Spalt (4), wobei
zwischen Rotor (2) und Stator (3) mindestens eine gegenüber dem Spalt (4) geschlossene Leitung (5) zur Kühlung des Elektromotors angeordnet ist, und
in mindestens einer Querschnittsfläche (B; Fig. 1b) des Stators (3) senkrecht zum Rotor (2) die mindestens eine Leitung (5) mit dem Stator (3) zur Befestigung und Wärmeleitung verbunden ist.

2. Motor nach Anspruch 1, **dadurch gekennzeichnet, dass** die mindestens eine Leitung (5) mit dem Stator (3) vergossen ist.

3. Motor nach einem der vorhergehenden Ansprüche, **dadurch gekennzeichnet, dass** der Elektromotor (3) ein Permanentmagnet-Synchronmotor ist.

4. Motor nach einem der vorhergehenden Ansprüche, **dadurch gekennzeichnet, dass** die Leitungen (5) in axialer Richtung (6) des Rotors (2) über eine geringere oder größere Länge (l_{Leitung}) verlaufen als die Länge von Stator (l_{Stator}) und/oder Rotormagnet (l_{Rotor}).

5. Motor nach einem der vorhergehenden Ansprüche, **dadurch gekennzeichnet, dass** für sämtliche Leitungen (5) eine gemeinsame geregelte Zu- (5a) und Ableitung (5b) gegeben ist.

6. Motor nach einem der vorhergehenden Ansprüche, **dadurch gekennzeichnet, dass** der durch die Leitungen (5) geführte Fluid im Kreislauf geführt wird und/oder mit einem Wärmetauscher (7) verbunden ist.

7. Motor nach einem der vorhergehenden Ansprüche, **dadurch gekennzeichnet, dass** die mindestens eine Leitung (5) den Rotor (2) mindestens einmal umläuft.

8. Motor nach einem der vorhergehenden Ansprüche, **dadurch gekennzeichnet, dass** die mindestens eine Leitung (5) spiralförmig verläuft.

9. Motor nach einem der vorhergehenden Ansprüche, **dadurch gekennzeichnet, dass** die Leitung (5) im Wesentlichen parallel zur axialen Richtung (6) des Rotors (2) verläuft.

10. Motor nach Anspruch 9, **dadurch gekennzeichnet, dass** mehrere Leitungen (5), die bezüglich des Rotors (2) im Wesentlichen axial angeordnet sind, radial über den Umfang des Stators verteilt sind.

11. Motor nach einem der vorhergehenden Ansprüche, **dadurch gekennzeichnet, dass** der Spalt (4) im Wesentliche kreiszylinderförmig ausgeführt ist.

12. Motor nach einem der vorhergehenden Ansprüche, **dadurch gekennzeichnet, dass** das Verhältnis der Querschnittsfläche des Stators zur Querschnittsfläche des Rotormagneten (V_{QS} = A_{Stator} : A_{Rotor- magnet}) zwischen 2 und 100, vorzugsweise zwischen 10 und 50 beträgt.

13. Motor nach Anspruch 1, **dadurch gekennzeichnet, dass** dieser als Generator betreibbar ist.

14. Motor nach einem der vorhergehenden Ansprüche, **dadurch gekennzeichnet, dass** der kleinste Innendurchmesser des Stators (3) 1,1- bis 15-mal so groß ist wie der größte Außendurchmesser des Rotors (2).

15. Maschine, enthaltend einen Motor nach einem der vorhergehenden Ansprüche, **dadurch gekennzeichnet, dass** die durch den Motor (1) verlaufende mindestens eine Leitung (5) mit einem weiteren zu kühlenden oder zu heizenden Bauteil wärmeleitend verbunden ist.
